# EUROPEAN PATENT SPECIFICATION

(11) **EP 1 500 556 B1**
(45) Date of publication and mention of the grant of the patent: **07.05.2008**
(21) Application number: 04022951.0
(22) Date of filing: 14.12.1999
(51) Int. Cl.: B60Q 11/00, B60Q 1/14, H05B 39/10, H05B 39/04

(54) **Vehicle headlight system**
Fahrzeug-Scheinwerfer-System
Système de projecteur pour véhicule

(30) Priority: 14.12.1998 US 112178 P
(43) Date of publication of application: 26.01.2005
(62) Divisional of application: 99967285.0
(73) Proprietor: Siemens VDO Automotive Corporation, Auburn Hills, Michigan 48326-2980 (US)
(72) Inventor: Poirier, James Anthony, 48314 Sterling Heights, MI (US); Schaffer, Thomas Scott, 48038 Clinto Twp, MI (US)
(74) Representative: French, Clive Harry

(56) References cited:
- EP-A- 0 586 734
- FR-A- 2 139 369
- US-A- 3 814 984
- US-A- 5 646 453
- US-A- 5 646 485
- US-A- 5 680 098
- US-A- 5 821 700
- US-A- 5 955 945
- US-A- 6 118 371
- PROFET (R) Preliminary Data Sheet BTS550P of Siemens Semiconductor Group; 31.08.1998 XP002307994

## Description

### BACKGROUND OF THE INVENTION

### 1. Field of the invention

The present invention relates to a driving and sensing control for a vehicle headlight system, and in particular to an automobile headlight system that controls a pulsed power source to energize a set of lighting elements.

### 2. Related Art

Motor vehicle headlight systems generally allow a set of headlamps to be illuminated in a low beam mode or a high beam mode. Usually, each headlamp includes a low beam filament and a high beam filament, wherein the low beam filaments are energized in the low beam mode and the high beam filaments are energized in the high beam mode. Such a system usually includes two relays and four fuses. One relay is used to energize both low beam filaments at full intensity and the other relay is used to energize both high beam filaments at full intensity. Each fuse is associated with, and provides overload protection, for a particular filament.

The system described above has a number of disadvantages. First, such a system does not allow pulsed power to be applied across the headlamp filaments because pulsed voltage cannot be continuously applied across a relay. Instead, the filaments are continuously energized at a particular voltage level; usually battery voltage minus small voltage drops from the system. Continuously energizing the filaments at high intensity causes high power consumption and shortens the life of the filaments. Also, fuses are mechanical devices that must be manually replaced in the event of a short to ground. When a fuse blows, the vehicle is usually taken to a dealer to replace the fuse for a cost or under warranty. As mechanical devices, fuses can be less reliable than semiconductor devices. Additionally, fuses do not allow the system to sense whether there is an open or short circuit condition in the headlight system and to automatically switch power to an operable filament when a fault condition is present with a particular filament.

Therefore, it is desirable to provide a vehicle headlight system that allows pulsed power to be applied across selected headlight filaments. It is also desirable to provide a vehicle headlight system which includes solid state switching devices to connect the filaments to the power source, and a control element to detect the presence of a fault condition and automatically adjust the headlight system to overcome detected fault conditions.

Documents EP0586734A1 and US-A-5,680,098 each describea driving and sensing control for a vehicle hedlight system system in which PWM pulsed power is applied to certain automotive lamps, to control their intensity, and to compensate for the failure of other lamps.

Closest prior art document EP 0 586 734 A1 discloses a driving and sensing control for a vehicle headlight system, wherein headlamps are provided with a single filament per lamp. When for example a low beam lamp fails, the adjacent high beam lamp is used for providing both low beam and high beam intensity levels, with the power applied to the filament being controlled to provide both low and high beam intensity levels from the filament, as required. The control comprises an input connected to a power source and an output connected to each of the filaments; the output carries an output signal from the control to each filament for operating the filament at a desired intensity level. The control modifies the output signal to one or more of the filaments and the modified signal causes the illumination of the filament at the desired intensity level.

### SUMMARY OF THE INVENTION

The present invention provides a driving and sensing control for a vehicle hedlight system as defined in the appended claims.

The present invention is a headlight system that provides pulsed power to the headlamp filaments through a set of solid state switching devices controlled by a control element. The present headlight system is capable of supplying pulsed power to maintain a constant RMS value across the selected headlamp filaments.

Using solid state switching devices reduces the need to have a fuse for each filament and thus the requirement of fuse serviceability. The present headlight system also recognizes when a fault condition exists for a particular filament and automatically switches to an operable filament. The present vehicle headlight system is also configured to adjust a characteristic of the pulsed power, for example, by adjusting the duty cycle of a PWM drive signal, in order to adjust the brightness of the filament in either headlamp.

EP 1 140 559, the earlier application in the sense of EPC Art. 76, discloses a vehicle hedlight system comprising a first lamp comprising first and second filaments; a second lamp comprising third and fourth filaments; a power supply; first and second switches, each of the switches having an input coupled to the power supply and an output coupled to a respective one of the first and second lamps, each switch output providing one of a constant output and a pulsed output in response to a control signal; first and second sensors respectively operatively coupled to one of the first and second switches, the first and second sensors providing a fault indication when a respective one of the first, second, third and fourth filaments are inoperable; a control unit coupled to the first and second switches and adapted to provide the control signal, the control signal automatically causing one of the first and second switches to provide a first pulsed output so that the brightness of the second and fourth filaments is approximately equai to the brightness of the first and third filaments when the fault indication is present.

According to the present invention, each of the headlamps include one filament and a control unit that controls a characteristic of the pulsed power across a particular filament to provide both low and high beam brightness levels from the filament. Here, only one filament is required to provide both levels of brightness. For example, the headlight system may be configured to provide PWM signal to the headlight filaments and the control unit may adjust the brightness of the filaments by adjusting the duty cycle of the PWM signal. In another embodiment, a range of duty cycles may be provided in order to provide a range of headlamp brightness levels rather than only low beam and high beam levels.

Further details and advantages of the invention will be apparent from the accompanying drawing and following description.

### BRIEF DESCRIPTION OF THE DRAWING

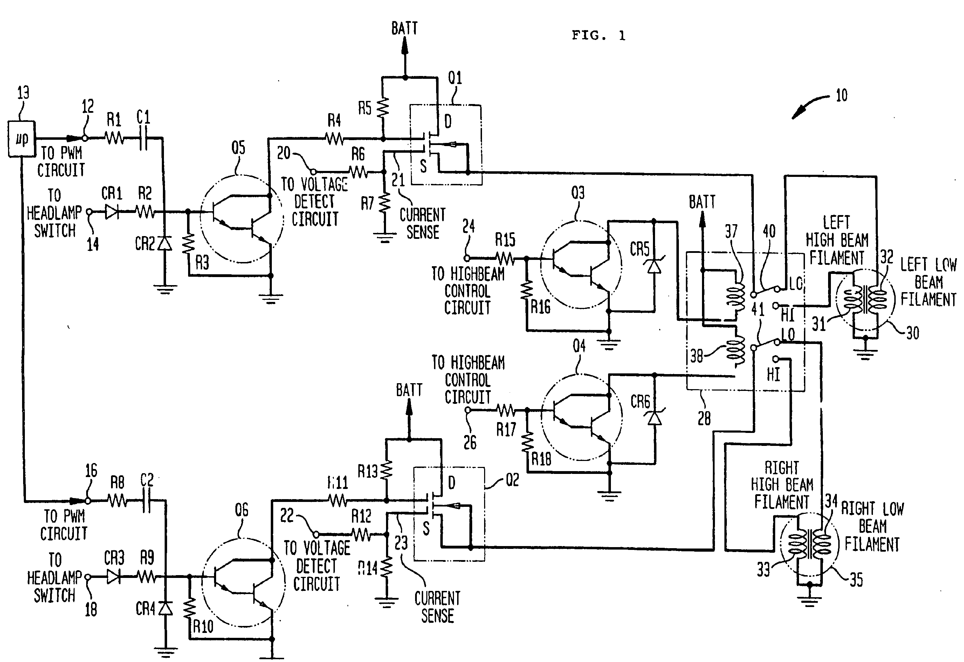

Fig. 1 shows a circuit diagram of a circuit useful for explaining the present invention.

### DETAILED DESCRIPTION

Circuit 10 is a portion of a headlight system as described in EP 1 140 559. The upper and lower portions of circuit 10 are mirror images of each other illustrating the portions associated with the left and right portions of the headlight system. Each portion includes a headlamp having a high beam filament and a low beam filament contained therein, and switch elements and relay elements for energizing the filaments. The upper portion of circuit 10, which relates to the left headlamp, is now described. This description is equally applicable to the lower portion of circuit 10.

Micro controller 13 is connected to input connection 12 and controls the generation of a pulse width modulated (PWM) drive signal. Micro controller 13 may be programmed to provide various control functions as is known in the art. The use and programming of a control unit such as micro controller 13 to control the various elements described below, as well as suitable types of micro controllers, is well known in the art and will not be discussed in detail here. A suitable micro controller includes, but is not limited to, Motorola MC688CO8. Manual control of the present headlight system by operation of a headlamp switch (not shown) is provided for via input connection 14.

The control signal from input connection 12 is coupled to the base of Darlington transistor Q5 resistor R1 and capacitor C1. Resistor R1 and Capacitor C 1 AC couple the signal from input connection 12 to Darlington transistor Q5. This AC coupling allows low beam operation of the headlight using the manual control signal from input connection 14 in the event of micro controller 13 failure. The combination of resistor R1 and capacitor C1 also provide isolation of micro controller 13 from the downstream elements of circuit 10 in the event micro controller 13 fails. Diode CR1 is an isolation diode that provides isolation for elements coupled to input connection 14. Diode CR2 provides negative transient spike protection for transistor Q5 maintaining the base emitter voltage C1 clamped at about at least -0.7 volts. Diode CR2 ensures proper discharge of capacitor C1 to generate the PWM signal.

The base of transistor Q5 is coupled to pull down resistor R3 which pulls the base voltage of transistor Q5 to ground, avoiding a floating base voltage, when no input signals are present at nodes 12,14. This ensures that transistor Q5 remains OFF when the filaments in headlamp 30 are to be de-energized. The collector of transistor Q5 is connected to the gate input of PROFET Q1 via current limiting resistor R4. The battery, or another suitable power source, is connected to the gate input of PROFET Q1 via resistor R5 to set the quiescent point of PROFET Q1. The drain of PROFET Q1 is coupled to the battery and the source of PROFET Q1 is coupled to steering relay 28. It can be seen that the application of a PWM signal to the gate input of PROFET Q1 controls PROFET Q1 to provide pulsed power to selected filament 31 or 32 via PROFET Q1 and steering relay 28.

PROFET Q1 further includes current sensing line 21 that provides an output that is proportional to the current provided to steering relay 28. The output of current sense line 21 is a signal which is proportional to the output of PROFET Q1, but reduced by a factor of about 12 to 15 thousand. Since the output from current sensing line 21 is proportional to the current applied to the filaments, zero current from current sense line 21 indicates an open circuit condition and a relatively high current from current sense line 21 indicates a short circuit condition. The output of current sense line 21 is provided to a voltage detect circuit (not shown) via output connection 20 through current limiting resistor R6. The output of the voltage detect circuit may be provided to micro controller 13 in a manner known in the art. Alternatively, the voltage detect circuit may be incorporated into micro controller 13.

Steering relay 28 is a dual relay package comprising relay 37 associated with left side headlamp 30 and relay 38 associated with right side headlamp 35. Steering relay 28 includes switches 40 and 41 associated with respective relays 37 and 38. For example, when relay 37 is de-energized, switch 40 connects the output of PROFET Q1 to low beam filament 32, and when relay 37 is energized, switch 40 connects the output of PROFET Q 1 to high beam filament 31. Relay 37 is energized and de-energized by a high beam control circuit (not shown) connected to input connection 24. The high beam control circuit may also be incorporated into micro controller 13, wherein micro controller is programmed to turn ON Darlington transistor Q3 when high beam filament 31 must be energized. Relay 37 is energized and de-energized by Darlington transistor Q3 that is connected to input connection 24 via current limiting resistor R15. Darlington Transistor Q3 is also coupled to Zener diode CR5 which protects transistor Q3 against transient conditions and to pull down resistor R16 which ensures that transistor Q3 remains in the OFF state when headlamp 30 highbeam is de-energized.

The operation of the circuit 10 is now described. During normal operation, steering relay 28 connects the outputs of PROFETs Q1 and Q2 to one of the desired filament pairs 32 and 34 or 31 and 33. PROFETs Q1 and Q2 are driven by respective transistors Q5 and Q6 based on control signals from input connections 12, 14, 16 and 18. Based on the control signals, PROFETs Q 1 and Q2 may provide either constant DC or pulsed power to the selected filament pair.

When a fault condition exists, the present headlight system automatically detects the presence of the fault and switches filaments in order to de-energize the faulty filament and to energize the unaffected filament. The present headlight system also adjusts the brightness of the unaffected filament by adjusting the PWM signal applied thereto in order to approximate the brightness of the filament in the unaffected headlamp. The presence of a faulty condition is detected by monitoring the output of current sensing lines 21 and 23. Zero current from current sensing lines 21 and 23 indicate the presence of an open circuit condition and high current from current sensing lines 21 and 23 indicated the presence of a short circuit condition.

The brightness of the energized filament is controlled by adjusting the duty cycle of the PWM drive signal applied to the filaments. For example, duty cycle of the PWM signal via input connections 12 and 16. For example, in the event that low beam filaments 32 and 34 are energized and a short circuit condition appears for low beam filament 32, micro controller 13 detects the short circuit contrition by detecting the high current output form current sensing line 21. In response, relay 37 is energized so that switch 40 connects the output of PROFET Q1 to high beam filament 31 and the duty cycle of PWM signal form PROFET Q1 is reduced to reduce the brightness of filament 31 to thereby approximate the brightness of low beam filament 34. In this manner, the present headlight system automatically detects a fault condition and compensates for the loss of a low beam filament by energizing the high beam filament at a lower brightness level. It can be seen that the present invention provides a driver with two low-beam headlights even if a low beam filament is unavailable from one headlamp. Previously, the loss of a low-beam filament would force the driver to use a single headlamp or the high beam.

In an alternative arrangement, although not shown, it can be appreciated that the circuit may be modified so that a fault condition in a high beam filament may be compensated for by energizing the low beam filament and adjusting the brightness of the low beam filament to approximate the high beam filament in the other headlamp. It can also be appreciated that a fault indication may be provided to the driver, for example by a flashing light on the dashboard, if the outputs from current sensing lines 21 and 23 indicate a fault condition. The detection and indication of a fault condition by the present headlight system allows the driver to immediately recognize that a fault condition exists where otherwise the drive may not become aware of the fault condition until much later.

Further, the automatic turn OFF feature of PROFETs Q1 and Q2 may be used to determine whether a short or an open circuit condition resulted in the shutoff of a particular PROFET. As is known in the art, a PROFET device automatically turn OFF in the event of high output current through it. As such, when a PROFET fails to provide any output current, it may be difficult to initially determine whether the PROFET turn OFF was due to a short circuit or an open circuit condition. Therefore, micro controller 13 may be programmed to periodically turn ON the effected PROFET and check the output of the associated current sense line. If no output is present at the current sense line, it can be assumed that an open condition exists whereas if a rapid increase in the output of the current sense line followed by zero current through the PROFET is detected immediately after the PROFET is turned ON. In either event, micro controller 13 may be programmed to automatically provide an indication to the driver and switch the power to an operable filament, that is, a filament not associated with the fault condition, via steering relay 28.

One of ordinary skill can further appreciate that the circuitry described can be readily adapted to provide daytime running (DTR) lamps. DTR lamps involve the headlights being illuminated even when the user has not actuated the manual headlamp switch. During day times, the DTR lamps are believed to improve the visibility of tne vehicle to other drivers. In a similar fashion, the circuit is also readily suitable for automatic headlamps, in which a light sensor is used to determine when it is sufficiently dark to warrant the illumination of the headlamps. In both these situations, one of ordinary skill can appreciate that the present invention provides the flexibility of illuminating any of the filaments to a variety of illumination levels through the use of PWM.

In a similar vein, another alternative arrangement includes a flash-to-pass feature, wherein the operator can signal to the vehicle ahead of hammer using headlamps 30 and 35. In some flash-to-pass features, a flash-to-pass input to a headlight system may cause all four filaments in both headlamps to be energized momentarily. The present headlight system implements a flash-to-pass feature by momentarily causing the low and high beam filaments to be alternately energized. Such a feature may be implemented by programming micro controller 13 as required to control relays 37 and 38 of steering relay 28 thereby causing the headlamps to flash. This flash-to-pass strategy is effective regardless of whether the headlamps are energized in the low beam or high beam mode. These filaments may further be illuminated at any of the various illumination intensities described earlier.

In another alternative arrangement, the present invention may be modified by providing a PROFET for each filament. Such a configuration would obviate the need for steering relay 28 because each filament is driven by a respective PROFET, which is controlled by micro controller 13. In such a case, any combination of the filaments may be energized, wherein each filament is energized by a respective DC or PWM signal. The presence of a fault condition in a particular filament is detected as described above by monitoring the output of the current sensing lines. Further, micro controller 13 may be programmed to adjust the combination of filaments and their respective drive signals to provide an approximately balanced output from the headlamps as described above.

According to the present invention, a single filament is provided in each headlamp. The brightness level of each filament is controlled by micro controller 13 by adjusting the duty cycle of the PWM drive signal as described above.

One of ordinary skill also appreciates that, while it may be desirable for performance reasons to include a driver circuit for each low-high beam filament combination, it may be desirable for cost reasons to have a single driver. In such situations, a detected low beam filament failure would result in both high beam filaments being operated in a reduced intensity mode through PWM.

The output signal may be modified, to control power applied to the respective filament, by adjusting a frequency of a pulse-width modulated voltage signal. The signal supplied to the switches may be a pulse-width modulated voltage signal having a frequency, and modification of said output signal may comprise increasing and decreasing said frequency.

Although exemplary embodiments of the present invention have been shown and described herein, it will be understood that various changes, alterations and modifications may be made to the system without departing from the scope of the appended claims.

PROFET is a trademark of Infineon Technologies AG.

## Claims

1. A driving and sensing control (10) for a vehicle headlight system, wherein each of first and second headlamps are provided with a single respective one of first and second filaments, such filaments each being used for providing both low beam and high beam intensity levels, with the power applied to each filament being controlled by a control unit (13) to provide both low and high beam intensity levels from the filament, as required, and further having a power source (BATT) for energizing said filaments; said control comprising:
an input connected to said power source;
an output connected to each of said filaments, said output carrying an output signal from said control to each said filament for operating said filament at a desired intensity level;
wherein said control modifies said output signal to one or more of said filaments, said modified signal causing the illumination of said filament at said desired intensity level, and
wherein the control comprises first and second solid state power switching devices (Q1, Q2), each being driven (R4, R11) by respective drive transistors (Q5, Q6), based on control signals from input connections (12, 14, 16, 18), for supplying (40, 41) either constant DC or pulsed power to an output of the solid state switching devices (Q1, Q2);
the output of the solid state switching devices (Q1, Q2) being respectively connected to the first and second filaments to cause the illumination of said filaments.

2. A control of claim 1, wherein said output signal is a pulse-width modulated voltage signal having a duty cycle, and wherein modification of said output signal comprises increasing and decreasing said duty cycle.

3. A control according to claim 1 or claim 2 wherein the solid state power switching devices each comprise a current sensing line (21,23) providing an output current proportional to the current supplied by the respective solid state power switching device, which output current is supplied through a grounded resistor (R7; R14), thereby providing a current sense voltage (20, 22) to a voltage detect circuit, through a current limiting resistor (R6; R12).

4. A control according to any preceding claim wherein each respective drive transistor (Q5, Q6) receives inputs (12,14) from a control unit (13), and a manual headlamp switch (14), and is controlled according to a summation of the inputs (12,14).

5. A control according to claim 4 wherein the control unit (13) supplies a PWM signal (12) to control the brightness of an illuminated filament.

6. A control according to claim 4 or claim 5 in which the manual headlamp switch provides a voltage representing a user's desire to illuminate a corresponding filament.

7. A control according to any of claims 4-6 wherein the control unit is AC coupled via a series connection of a resistor (R1; R8) and a capacitor (C1; C2) to, but is otherwise isolated from, the drive transistors (Q5, Q6).

8. A control according to any preceding claim in which each power switch is a PROFET power switch.

9. A control according to any preceding claim wherein a range of duty cycles of constant DC or pulsed power are provided in order to provide a range of headlamp brightness levels, rather than only low beam and high beam levels.

10. A control according to any of claims 1-9 wherein each solid state power switching device has an automatic OFF feature, in response to high load current.

11. A control according to claim 10 wherein each solid state power switching device is periodically turned on, to enable detection of a sequence comprising a rapid increase in the output of the current sense line followed by zero current through the solid state power switching device, indicating a short circuit condition, and an absence of said sequence, indicating no short circuit condition.

12. A control according to any of claims 1-11, wherein a separate solid state power switching device is provided for each filament and each solid state power switching device is controlled by the control unit (13).

13. A control according to claim 12 wherein each solid state power switching device is controlled by a DC or PWM control signal supplied (R4) in response to control signals (12) from the control unit, and a current sensing output (20, 22) is provided from each solid state power switching device to the control unit (13).

14. A control according to claim 12 or 13 wherein the control unit is programmed to adjust a combination of filaments and respective drive signals to provide an approximately balanced output from the headlamps.

## Patentansprüche

1. Steuer- und Sensorschaltung (10) für ein Fahrzeug-Scheinwerfer-System, bei dem jeder der ersten und zweiten Scheinwerfer mit einem einzigen der ersten bzw. zweiten Glühfäden ausgestattet ist, wobei diese Glühfäden jeweils dazu eingesetzt werden, sowohl eine Abblendlicht- als auch eine Fernlicht-Helligkeitsstufe bereitzustellen, wobei der an jeden Glühfaden angelegte Strom durch eine Steuereinheit (13) geregelt wird, um nach Bedarf sowohl die Abblendlicht- als auch die Fernlicht-Helligkeitsstufe über den Glühfaden bereitzustellen, und wobei ferner eine Stromquelle (BATT) vorhanden ist, die die besagten Glühfäden mit Strom versorgt, wobei die besagte Steuerschaltung folgendes umfasst:
eine Eingangsstufe, die mit der besagten Stromquelle verbunden ist;
eine Ausgangsstufe, die mit jedem der besagten Glühfäden verbunden ist, wobei die besagte Ausgangsstufe ein Ausgangssignal von der besagten Steuerschaltung zu jedem der besagten Glühfäden überträgt, um den besagten Glühfaden mit einer gewünschten Helligkeitsstufe zu erleuchten;
wobei die besagte Steuerschaltung das besagte Ausgangssignal an einen oder mehrere der besagten Glühfäden modifiziert, sodass das besagte modifizierte Signal die Erleuchtung des besagten Glühfadens mit der besagten gewünschten Helligkeitsstufe bewirkt, und
wobei die Steuerschaltung ein erstes und ein zweites Halbleiter-Stromschaltgerät (Q1, Q2) umfasst, die jeweils durch entsprechende Steuertransistoren (Q5, Q6) angesteuert werden (R4, R11), basierend auf Steuersignalen von Eingangsstufenanschlüssen (12, 14, 16, 18), um entweder konstanten Gleichstrom oder gepulsten Strom an einen Ausgang der Halbleiter-Stromschaltgeräte (Q1, Q2) bereitzustellen (40, 41):
wobei der Ausgang der Halbleiter-Stromschaltgeräte (Q1, Q2) mit den ersten bzw. zweiten Glühfäden verbunden ist, um eine Erleuchtung der besagten Glühfäden zu bewirken.

2. Steuerschaltung gemäß Anspruch 1, bei der das besagte Ausgangssignal ein pulsbreitenmoduliertes Spannungssignal ist, welches einen Tastgrad aufweist, und wobei eine Modifikation des besagten Ausgangssignals umfasst, den besagten Tastgrad zu erhöhen bzw. zu verringern.

3. Steuerschaltung gemäß Anspruch 1 oder Anspruch 2, bei der die Halbleiter-Stromschaltgeräte jeweils eine Strommessleitung (21, 23) umfassen, die einen Ausgangsstrom bereitstellen, welcher sich proportional zu dem Strom verhält, der von dem jeweiligen Halbleiter-Stromschaltgerät bereitgestellt wird, wobei der Ausgangsstrom über einen geerdeten Widerstand (R7; R14) bereitgestellt wird, wodurch über einen Strombegrenzungswiderstand (R6; R12) eine Strommessspannung (20, 22) an eine Spannungserkennungsschaltung bereitgestellt wird.

4. Steuerschaltung gemäß einem der vorstehenden Ansprüche, bei der jeder Steuertransistor (Q5, Q6) Eingänge (12, 14) von einer Steuereinheit (13) sowie einem manuell betätigten Scheinwerfer-Schalter empfängt und entsprechend der Summe der Eingänge (12, 14) gesteuert wird.

5. Steuerschaltung gemäß Anspruch 4, bei der die Steuereinheit (13) ein pulsbreitenmoduliertes (FWM-) Signal bereitstellt, um die Helligkeit eines erleuchteten Glühfadens zu regeln.

6. Steuerschaltung gemäß Anspruch 4 oder Anspruch 5, bei der der manuell betätigte Scheinwerfer-Schalter eine Spannung bereitstellt, die die Absicht des Benutzers repräsentiert, einen entsprechenden Glühfaden zu erleuchten.

7. Steuerschaltung gemäß einem der Ansprüche 4 bis 6, bei der die Steuereinheit über eine Reihenschaltung aus einem Widerstand (R1; R8) und einem Kondensator (C1; C2) mit den Steuertransistoren (Q5, Q6) wechselstromgekoppelt, ansonsten aber gegen diese isoliert ist.

8. Steuerschaltung gemäß einem der vorstehenden Ansprüche, bei der jedes Stromschaltgerät ein PROFET-Stromschaltgerät ist.

9. Steuerschaltung gemäß einem der vorstehenden Ansprüche, bei der ein Bereich von Tastgraden von konstantem Gleichstrom oder gepulstem Strom bereitgestellt wird, um einen Bereich von Helligkeitsstufen der Scheinwerfer statt nur einer Abblendlicht- und einer Fernlicht-Helligkeitsstufe bereitzustellen.

10. Steuerschaltung gemäß einem der Ansprüche 1 bis 9, bei der jedes Halbleiter-Stromschaltgerät eine automatische AUSschaltfunktion besitzt als Reaktion auf einen hohen Laststrom.

11. Steuerschaltung gemäß Anspruch 10, bei der jedes Halbleiter-Stromschaltgerät in regelmäßigen Abständen eingeschaltet wird, um die Erkennung einer Sequenz zu ermöglichen, welche einen schnellen Anstieg im Ausgang der Strommessleitung gefolgt von einem Strom Null durch das Halbleiter-Stromschaltgerät umfasst, was auf eine Masseschlussbedingung hinweist, sowie eine Abwesenheit der besagten Sequenz, welche anzeigt, dass keine Masseschlussbedingung vorliegt.

12. Steuerschaltung gemäß einem der Ansprüche 1 bis 11, bei der für jeden Glühfaden ein separates Halbleiter-Stromschaltgerät bereitgestellt wird und jedes Halbleiter-Stromschaltgerät durch die Steuereinheit (13) gesteuert wird.

13. Steuerschaltung gemäß Anspruch 12, bei der jedes Halbleiter-Stromschaltgerät durch ein Gleichstrom- oder ein pulsbreitenmoduliertes (PWM-) Steuersignal gesteuert wird, welches als Reaktion auf Steuersignale (12) von der Steuereinheit bereitgestellt wird (R4), und von jedem Halbleiter-Stromschaltgerät ein Strommessausgang (20, 22) zur Steuereinheit (13) bereitgestellt wird.

14. Steuerschaltung gemäß Anspruch 12 oder 13, bei der die Steuereinheit dafür programmiert ist, eine Kombination von Glühfäden sowie jeweilige Ansteuer-Signale anzupassen, um eine annähernd ausgeglichene Lichtabgabe von den Scheinwerfern bereitzustellen.

## Revendications

1. Commande d'attaque et de détection (10) pour un système de projecteur pour véhicule, dans laquelle des premier et second phares sont chacun pourvus d'un seul filament respectif parmi un premier et un second filament, ces filaments étant chacun utilisés pour fournir les niveaux d'intensité à la fois de feux de croisement et de feux de route, le courant appliqué à chaque filament étant régulé par une unité de commande (13) pour fournir les niveaux d'intensité à la fois de feux de croisement et de feux de route à partir du filament, selon les besoins, et comportant par ailleurs une source de courant (BATT) pour mettre sous tension lesdits filaments, ladite commande comprenant :
une entrée reliée à ladite source de courant ;
une sortie reliée à chacun desdits filaments, ladite sortie transportant un signal de sortie depuis ladite commande jusqu'à chacun desdits filaments pour faire fonctionner ledit filament à un niveau d'intensité voulu ;
en sachant que ladite commande modifie ledit signal de sortie destiné à un ou plusieurs desdits filaments, ledit signal modifié provoquant l'allumage dudit filament audit niveau d'intensité voulue, et
en sachant que la commande comprend un premier et un second dispositif de commutation de courant à semi-conducteur (Q1, Q2), chacun étant attaqué (R4, R11) par des transistors d'attaque (Q5, Q6) respectifs, sur la base de signaux de commande provenant de connexions d'entrée (12, 14, 16, 18), pour fournir (40, 41) soit un courant continu constant, soit un courant pulsé à une sortie des dispositifs de commutation à semi-conducteur (Q1, Q2) ;
la sortie des dispositifs de commutation à semi-conducteur (Q1, Q2) étant connectée respectivement au premier et au deuxième filament pour provoquer l'allumage desdits filaments.

2. Commande selon la revendication 1, dans laquelle ledit signal de sortie est un signal de tension à modulation d'impulsion en largeur ayant un rapport cyclique et la modification dudit signal de sortie consistant en l'augmentation et en la diminution dudit rapport cyclique.

3. Commande selon la revendication 1 ou la revendication 2 dans laquelle les dispositifs de commutation de puissance à semi-conducteur comprennent chacun une ligne de détection de courant (21, 23) fournissant un courant de sortie proportionnel au courant fourni par le dispositif de commutation de puissance à semi-conducteur concerné, lequel courant de sortie est fourni par l'intermédiaire d'une résistance mise à la masse (R7 ; R14), ce qui fournit une tension de détection de courant (20, 22) à un circuit de détection de tension, par l'intermédiaire d'une résistance de limitation de courant (R6 R12).

4. Commande selon l'une quelconque des revendications précédentes dans laquelle chaque transistor d'attaque respectif (Q5, Q6) reçoit des entrées (12, 14) d'une unité de commande (13) et d'un commutateur manuel de projecteur, et est commandé conformément à la sommation des entrées (12, 14).

5. Commande selon la revendication 4 dans laquelle l'unité de commande (13) fournit un signal MIL pour réguler la luminosité d'un filament allumé.

6. Commande selon la revendication 4 ou la revendication 5 dans laquelle le commutateur manuel de projecteur fournit une tension représentant un souhait de l'utilisateur d'allumer un filament correspondant.

7. Commande selon l'une quelconque des revendications 4-6 dans laquelle l'unité de commande est couplée en courant alternatif par une connexion en série d'une résistance (R1 ; R8) et d'un condensateur (C1; C2) aux, mais étant pour le reste isolée des, transistors d'attaque (Q5, Q6).

8. Commande selon l'une quelconque des revendications précédentes dans laquelle chaque commutateur de courant est un commutateur de courant PROFET.

9. Commande selon l'une quelconque des revendications précédentes dans laquelle une gamme de rapports cycliques de courant continu constant ou de courant pulsé est fournie afin de fournir une gamme de niveaux de luminosité de projecteur au lieu de seulement des niveaux de croisement et de route.

10. Commande selon l'une quelconque des revendications 1-9 dans laquelle chaque dispositif de commutation de courant à semi-conducteur comporte une fonction automatique de mise à l'état BLOQUE en réaction à un fort courant de charge.

11. Commande selon la revendication 10 dans laquelle chaque dispositif de commutation de courant à semi-conducteur est périodiquement mis à l'état passant pour permettre la détection d'une séquence constituée d'une rapide augmentation de la sortie de la ligne de détection de courant suivie d'un courant nul dans le dispositif de commutation de puissance à semi-conducteur, ce qui indique une situation de court-circuit, et une absence de ladite séquence, ce qui indique une situation sans court-circuit.

12. Commande selon l'une quelconque des revendications 1-11, dans laquelle un dispositif de commutation de courant à semi-conducteur distinct est prévu pour chaque filament et chaque dispositif de commutation de courant à semi-conducteur est commandé par l'unité de commande (13).

13. Commande selon la revendication 12 dans laquelle chaque dispositif de commutation de courant à semi-conducteur est commandé par un signal de commande à courant continu ou MIL fourni (R4) en réaction à des signaux de commande (12) provenant de l'unité de commande, et une sortie de détection de courant (20, 22) est fournie par chaque dispositif de commutation de courant à semi-conducteur à destination de l'unité de commande (13).

14. Commande selon la revendication 12 ou 13 dans laquelle l'unité de commande est programmée pour ajuster une combinaison de filaments et de signaux d'attaque respectifs afin de fournir une sortie approximativement équilibrée à partir des projecteurs.
